(19) Europäisches Patentamt / European Patent Office / Office européen des brevets

(11) **EP 2 055 591 B1**

(12) **EUROPEAN PATENT SPECIFICATION**

(45) Date of publication and mention
of the grant of the patent:
**30.10.2013 Bulletin 2013/44**

(21) Application number: **08019137.2**

(22) Date of filing: **31.10.2008**

(51) Int Cl.:
*B60W 20/00* (2006.01)   *B60K 1/02* (2006.01)
*B60K 6/26* (2007.10)   *B60K 6/365* (2007.10)
*B60K 6/445* (2007.10)   *B60K 6/547* (2007.10)
*F16H 3/72* (2006.01)   *B60W 10/02* (2006.01)
*B60W 10/06* (2006.01)   *B60W 10/08* (2006.01)
*B60W 10/10* (2012.01)

(54) **Method and apparatus for adapting engine operation in a hybrid powertrain system**

Verfahren und Vorrichtung zur Anpassung des Verbrennungsmotorbetriebs in einem Hybridantriebsstrangsystem

Procédé et appareil pour adapter une opération de moteur dans un système de transmission hybride

(84) Designated Contracting States:
**DE**

(30) Priority: **05.11.2007 US 985637 P**
**15.10.2008 US 251460**

(43) Date of publication of application:
**06.05.2009 Bulletin 2009/19**

(73) Proprietors:
- **GM Global Technology Operations LLC
  Detroit, MI 48265-3000 (US)**
- **Daimler AG
  70546 Stuttgart (DE)**
- **Chrysler LLC
  Auburn Hills, MI 48326-2757 (US)**
- **Bayerische Motoren Werke Aktiengesellschaft
  80788 München (DE)**

(72) Inventor: **Heap, Anthony, H.**
**Ann Arbor
MI 48105 (US)**

(74) Representative: **Manitz, Finsterwald & Partner
GbR
Postfach 31 02 20
80102 München (DE)**

(56) References cited:
EP-A2- 1 772 301    WO-A2-2006/103501
US-A- 5 909 094    US-A1- 2003 054 920
US-A1- 2004 014 563    US-A1- 2004 072 650

**EP 2 055 591 B1**

**Description**

TECHNICAL FIELD

This disclosure pertains to a method for controlling a powertrain in accordance with the preamble of claim 1.

BACKGROUND

The statements in this section merely provide background information related to the present disclosure and may not constitute prior art.

Known hybrid powertrain architectures include torque generative devices which transfer torque through a transmission device to an output member. One exemplary hybrid powertrain includes a two-mode, compound-split, electro-mechanical transmission which utilizes an input member for receiving tractive torque from a prime mover power source, preferably an internal combustion engine, and an output member. The output member can be operatively connected to a driveline for a motor vehicle for transferring and reacting tractive torque therewith. Torque generative devices can include internal combustion engines, fuel cells, and torque generating machines comprising, e.g., electric machines and hydraulic machines. Torque generating machines can operate as torque motors to transfer torque to the transmission independently of a torque input from the internal combustion engine. Torque generating machines can operate as generators to transform vehicle kinetic energy transferred through the vehicle driveline to potential energy that is storable in an electrical energy storage device in the form of electric power or storable in a hydraulic accumulator energy storage device in the form of hydraulic pressure. A control system monitors various inputs from the vehicle and the operator and provides operational control of the hybrid powertrain, including, e.g., controlling engine operation, transmission operating range state and gear shifting, controlling the torque generating machines, and regulating the power interchange among the energy storage device and the torque generating machines to manage torque, speed, and power outputs of the transmission.

EP 1 772 301 A2 discloses a method in accordance with the preamble of claim 1. Further prior art is known from US 2004/0072650 A1, US 2004/0014563 A1, US 2003/0054920 A1, WO 2006/103501 A2 and US 5 909 094 A.

It is an object of the present invention to provide an improved method for controlling a powertrain.

SUMMARY

The object is satisfied by a method in accordance with the features of claim 1. Preferred embodiments of the invention are mentioned in the dependent claims.

A powertrain includes an engine coupled to an input member of a hybrid transmission. The hybrid transmission is operative to transfer power between an input member and a plurality of torque machines and an output member. A method for controlling the powertrain includes, monitoring operation of the hybrid transmission, determining motor torque offsets for the torque machines, transforming the motor torque offsets for the torque machines to an input torque offset and an output torque offset of the hybrid transmission, and adjusting operation of the engine based upon the input torque offset and the output torque offset of the hybrid transmission.

BRIEF DESCRIPTION OF THE DRAWINGS

One or more embodiments will now be described, by way of example, with reference to the accompanying drawings, in which:

Fig. 1 is a schematic diagram of an exemplary hybrid powertrain, in accordance with the present disclosure;

Fig. 2 is a schematic diagram of an exemplary architecture for a control system and hybrid powertrain, in accordance with the present disclosure; and

Figs. 3, 4, and 5 are schematic flow diagrams of a control system architecture for controlling and managing torque in a hybrid powertrain system, in accordance with the present disclosure.

DETAILED DESCRIPTION

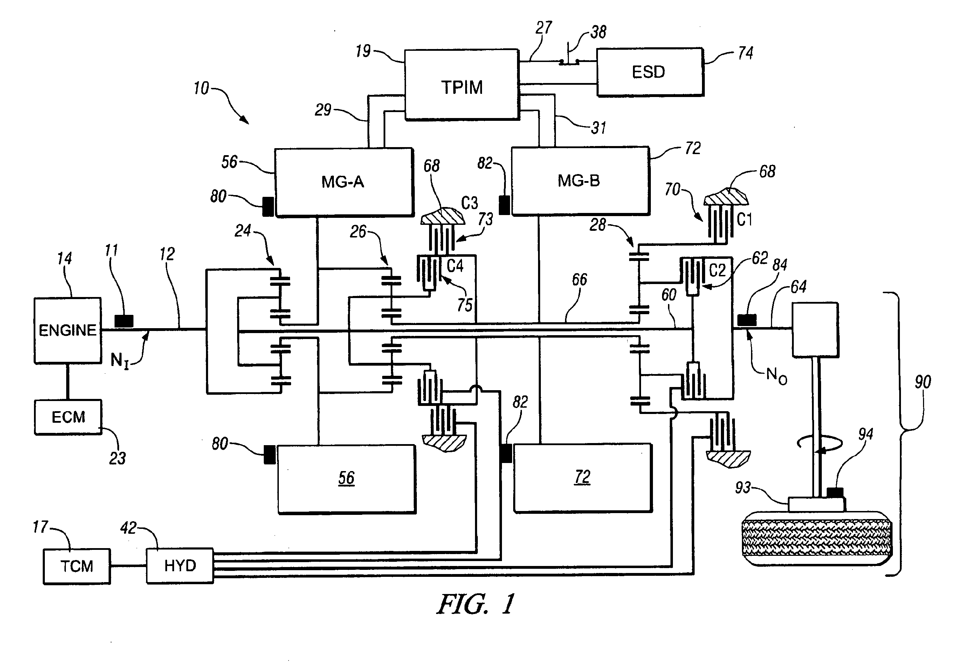

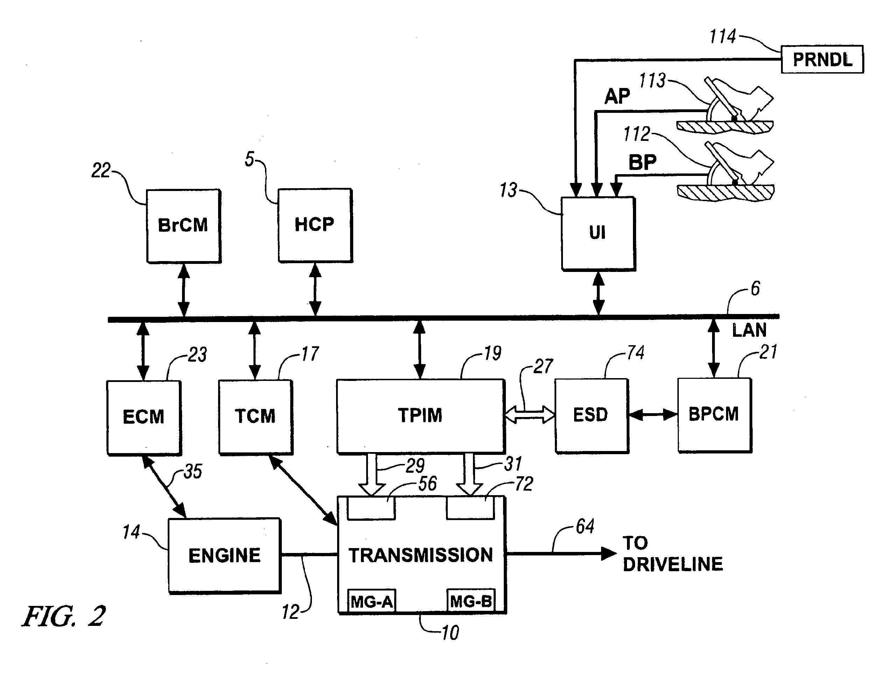

Referring now to the drawings, wherein the showings are for the purpose of illustrating certain exemplary embodiments, Figs. 1 and 2 depict an exemplary hybrid powertrain. The exemplary hybrid powertrain in accordance with the present disclosure is depicted in Fig. 1, comprising a two-mode, compound-split, electro-mechanical hybrid transmission 10 operatively connected to an engine 14 and torque machines comprising first and second electric machines ('MG-A') 56 and ('MG-B') 72. The engine 14 and first and second electric machines 56 and 72 each generate mechanical power which can be transferred to the transmission 10. The power generated by the engine 14 and the first and second electric machines 56 and 72 and transferred to the transmission 10 is described in terms of input and motor torques, referred to herein as $T_I$, $T_A$, and $T_B$ respectively, and speed, referred to herein as $N_I$, $N_A$, and $N_B$, respectively.

The exemplary engine 14 comprises a multi-cylinder internal combustion engine selectively operative in several states to transfer torque to the transmission 10 via an input shaft 12, and can be either a spark-ignition or a compression-ignition engine. The engine 14 includes a crankshaft (not shown) operatively coupled to the input shaft 12 of the transmission 10. A rotational speed sensor 11 monitors rotational speed of the input shaft 12. Power output from the engine 14, comprising rotational speed and engine torque, can differ from the input speed $N_I$ and the input torque $T_I$ to the transmission 10 due to placement of torque-consuming components on the input shaft 12 between the engine 14 and the transmission 10, e.g., a hydraulic pump (not shown) and/or a torque management device (not shown).

The exemplary transmission 10 comprises three planetary-gear sets 24, 26 and 28, and four selectively engageable torque-transferring devices, i.e., clutches C1 70, C2 62, C3 73, and C4 75. As used herein, clutches refer to any type of friction torque transfer device including single or compound plate clutches or packs, band clutches, and brakes, for example. A hydraulic control circuit 42, preferably controlled by a transmission control module (hereafter 'TCM') 17, is operative to control clutch states. Clutches C2 62 and C4 75 preferably comprise hydraulically-applied rotating friction clutches. Clutches C1 70 and C3 73 preferably comprise hydraulically-controlled stationary devices that can be selectively grounded to a transmission case 68. Each of the clutches C1 70, C2 62, C3 73, and C4 75 is preferably hydraulically applied, selectively receiving pressurized hydraulic fluid via the hydraulic control circuit 42.

The first and second electric machines 56 and 72 preferably comprise three-phase AC machines, each including a stator (not shown) and a rotor (not shown), and respective resolvers 80 and 82. The motor stator for each machine is grounded to an outer portion of the transmission case 68, and includes a stator core with coiled electrical windings extending therefrom. The rotor for the first electric machine 56 is supported on a hub plate gear that is operatively attached to shaft 60 via the second planetary gear set 26. The rotor for the second electric machine 72 is fixedly attached to a sleeve shaft hub 66.

Each of the resolvers 80 and 82 preferably comprises a variable reluctance device including a resolver stator (not shown) and a resolver rotor (not shown). The resolvers 80 and 82 are appropriately positioned and assembled on respective ones of the first and second electric machines 56 and 72. Stators of respective ones of the resolvers 80 and 82 are operatively connected to one of the stators for the first and second electric machines 56 and 72. The resolver rotors are operatively connected to the rotor for the corresponding first and second electric machines 56 and 72. Each of the resolvers 80 and 82 is signally and operatively connected to a transmission power inverter control module (hereafter 'TPIM') 19, and each senses and monitors rotational position of the resolver rotor relative to the resolver stator, thus monitoring rotational position of respective ones of first and second electric machines 56 and 72. Additionally, the signals output from the resolvers 80 and 82 are interpreted to provide the rotational speeds for first and second electric machines 56 and 72, i.e., $N_A$ and $N_B$, respectively.

The transmission 10 includes an output member 64, e.g. a shaft, which is operably connected to a driveline 90 for a vehicle (not shown), to provide output power to the driveline 90 that is transferred to vehicle wheels 93, one of which is shown in Fig. 1. The output power at the output member 64 is characterized in terms of an output rotational speed $N_O$ and an output torque $T_O$. A transmission output speed sensor 84 monitors rotational speed and rotational direction of the output member 64. Each of the vehicle wheels 93 is preferably equipped with a sensor 94 adapted to monitor wheel speed, $V_{SS-WHL}$, the output of which is monitored by a control module of a distributed control module system described with respect to Fig. 2, to determine vehicle speed, and absolute and relative wheel speeds for braking control, traction control, and vehicle acceleration management.

The input torque from the engine 14 and the motor torques from the first and second electric machines 56 and 72 ($T_I$, $T_A$, and $T_B$ respectively) are generated as a result of energy conversion from fuel or electrical potential stored in an electrical energy storage device (hereafter 'ESD') 74. The ESD 74 is high voltage DC-coupled to the TPIM 19 via DC transfer conductors 27. The transfer conductors 27 include a contactor switch 38. When the contactor switch 38 is closed, under normal operation, electric current can flow between the ESD 74 and the TPIM 19. When the contactor switch 38 is opened electric current flow between the ESD 74 and the TPIM 19 is interrupted. The TPIM 19 transmits electrical power to and from the first electric machine 56 by transfer conductors 29, and the TPIM 19 similarly transmits electrical power to and from the second electric machine 72 by transfer conductors 31 to meet the torque commands for the first and second electric machines 56 and 72 in response to the motor torque commands $T_A$ and $T_B$. Electrical current is transmitted to and from the ESD 74 in accordance with whether the ESD 74 is being charged or discharged.

The TPIM 19 includes the pair of power inverters (not shown) and respective motor control modules (not shown) configured to receive the motor torque commands and control inverter states therefrom for providing motor drive or regeneration functionality to meet the commanded motor torques $T_A$ and $T_B$. The power inverters comprise known complementary three-phase power electronics devices, and each includes a plurality of insulated gate bipolar transistors (not shown) for converting DC power from the ESD 74 to AC power for powering respective ones of the first and second electric machines 56 and 72, by switching at high frequencies. The insulated gate bipolar transistors form a switch mode power supply configured to receive control commands. There is typically one pair of insulated gate bipolar transistors for each phase of each of the three-phase electric machines. States of the insulated gate bipolar transistors are controlled to provide motor drive mechanical power generation or electric power regeneration functionality. The three-phase inverters receive or supply DC electric power via DC transfer conductors 27 and transform it to or from three-phase AC power, which is conducted to or from the first and second electric machines 56 and 72 for operation as motors or generators via transfer conductors 29 and 31 respectively.

Fig. 2 is a schematic block diagram of the distributed control module system. The elements described hereinafter comprise a subset of an overall vehicle control architecture, and provide coordinated system control of the exemplary hybrid powertrain described in Fig. 1. The distributed control module system synthesizes pertinent information and inputs, and executes algorithms to control various actuators to meet control objectives, including objectives related to fuel economy, emissions, performance, drivability, and protection of hardware, including batteries of ESD 74 and the first and second electric machines 56 and 72. The distributed control module system includes an engine control module (hereafter 'ECM') 23, the TCM 17, a battery pack control module (hereafter 'BPCM') 21, and the TPIM 19. A hybrid control module (hereafter 'HCP') 5 provides supervisory control and coordination of the ECM 23, the TCM 17, the BPCM 21, and the TPIM 19. A user interface ('UI') 13 is operatively connected to a plurality of devices through which a vehicle operator controls or directs operation of the electro-mechanical hybrid powertrain. The devices include an accelerator pedal 113 ('AP'), an operator brake pedal 112 ('BP'), a transmission gear selector 114 ('PRNDL'), and a vehicle speed cruise control (not shown). The transmission gear selector 114 may have a discrete number of operator-selectable positions, including the rotational direction of the output member 64 to enable one of a forward and a reverse direction.

The aforementioned control modules communicate with other control modules, sensors, and actuators via a local area network (hereafter 'LAN') bus 6. The LAN bus 6 allows for structured communication of states of operating parameters and actuator command signals between the various control modules. The specific communication protocol utilized is application-specific. The LAN bus 6 and appropriate protocols provide for robust messaging and multi-control module interfacing between the aforementioned control modules, and other control modules providing functionality including e.g., antilock braking, traction control, and vehicle stability. Multiple communications buses may be used to improve communications speed and provide some level of signal redundancy and integrity. Communication between individual control modules can also be effected using a direct link, e.g., a serial peripheral interface ('SPI') bus (not shown).

The HCP 5 provides supervisory control of the hybrid powertrain, serving to coordinate operation of the ECM 23, TCM 17, TPIM 19, and BPCM 21. Based upon various input signals from the user interface 13 and the hybrid powertrain, including the ESD 74, the HCP 5 determines an operator torque request, an output torque command, an engine input torque command, clutch torque(s) for the applied torque-transfer clutches C1 70, C2 62, C3 73, C4 75 of the transmission 10, and the motor torque commands $T_A$ and $T_B$ for the first and second electric machines 56 and 72.

The ECM 23 is operatively connected to the engine 14, and functions to acquire data from sensors and control actuators of the engine 14 over a plurality of discrete lines, shown for simplicity as an aggregate bidirectional interface cable 35. The ECM 23 receives the engine input torque command from the HCP 5. The ECM 23 determines the actual engine input torque, $T_I$, provided to the transmission 10 at that point in time based upon monitored engine speed and load, which is communicated to the HCP 5. The ECM 23 monitors input from the rotational speed sensor 11 to determine the engine input speed to the input shaft 12, which translates to the transmission input speed, $N_I$. The ECM 23 monitors inputs from sensors (not shown) to determine states of other engine operating parameters including, e.g., a manifold pressure, engine coolant temperature, ambient air temperature, and ambient pressure. The engine load can be determined, for example, from the manifold pressure, or alternatively, from monitoring operator input to the accelerator pedal 113. The ECM 23 generates and communicates command signals to control engine actuators, including, e.g., fuel injectors, ignition modules, and throttle control modules, none of which are shown.

The TCM 17 is operatively connected to the transmission 10 and monitors inputs from sensors (not shown) to determine states of transmission operating parameters. The TCM 17 generates and communicates command signals to control the transmission 10, including controlling the hydraulic control circuit 42. Inputs from the TCM 17 to the HCP 5 include estimated clutch torques for each of the clutches, i.e., C1 70, C2 62, C3 73, and C4 75, and rotational output speed, $N_O$, of the output member 64. Other actuators and sensors may be used to provide additional information from the TCM 17 to the HCP 5 for control purposes. The TCM 17 monitors inputs from pressure switches (not shown) and selectively actuates pressure control solenoids (not shown) and shift solenoids (not shown) of the hydraulic control circuit 42 to selectively actuate the various clutches C1 70, C2 62, C3 73, and C4 75 to achieve various transmission operating range states, as described hereinbelow.

The BPCM 21 is signally connected to sensors (not shown) to monitor the ESD 74, including states of electrical current and voltage parameters, to provide information indicative of parametric states of the batteries of the ESD 74 to the HCP 5. The parametric states of the batteries preferably include battery state-of-charge, battery voltage, battery temperature, and available battery power, referred to as a range $P_{BAT\_MM}$ to $P_{BAT\_MAX}$.

A brake control module (hereafter 'BrCM') 22 is operatively connected to friction brakes (not shown) on each of the vehicle wheels 93. The BrCM 22 monitors the operator input to the brake pedal 112 and generates control signals to control the friction brakes and sends a control signal to the HCP 5 to operate the first and second electric machines 56 and 72 based thereon.

Each of the control modules ECM 23, TCM 17, TPIM 19, BPCM 21, and BrCM 22 is preferably a general-purpose digital computer comprising a microprocessor or central processing unit, storage mediums comprising read only memory ('ROM'), random access memory ('RAM'), electrically programmable read only memory ('EPROM'), a high speed clock, analog to digital ('A/D') and digital to analog ('D/A') circuitry, and input/output circuitry and devices ('I/O') and appropriate signal conditioning and buffer circuitry. Each of the control modules has a set of control algorithms, comprising resident program instructions and calibrations stored in one of the storage mediums and executed to provide the respective functions of each computer. Information transfer between the control modules is preferably accomplished using the LAN bus 6 and SPI buses. The control algorithms are executed during preset loop cycles such that each algorithm is executed at least once each loop cycle. Algorithms stored in the non-volatile memory devices are executed by one of the central processing units to monitor inputs from the sensing devices and execute control and diagnostic routines to control operation of the actuators, using preset calibrations. Loop cycles are executed at regular intervals, for example each 3.125, 6.25, 12.5, 25 and 100 milliseconds during ongoing operation of the hybrid powertrain. Alternatively, algorithms may be executed in response to the occurrence of an event.

The exemplary hybrid powertrain selectively operates in one of several states that can be described in terms of engine states comprising one of an engine-on state ('ON') and an engine-off state ('OFF'), and transmission operating range states comprising a plurality of fixed gears and continuously variable operating modes, described with reference to Table 1, below.

Table 1

| Description | Engine State | Transmission Operating Range State | Applied Clutches |
|---|---|---|---|
| M1_Eng_Off | OFF | EVT Mode 1 | C1 70 |
| M1_Eng_On | ON | EVT Mode 1 | C1 70 |
| G1 | ON | Fixed Gear Ratio 1 | C1 70 C4 75 |
| G2 | ON | Fixed Gear Ratio 2 | C1 70 C2 62 |
| M2_Eng_Off | OFF | EVT Mode 2 | C2 62 |
| M2_Eng_On | ON | EVT Mode 2 | C2 62 |
| G3 | ON | Fixed Gear Ratio 3 | C2 62 C4 75 |
| G4 | ON | Fixed Gear Ratio 4 | C2 62 C3 73 |

Each of the transmission operating range states is described in the table and indicates which of the specific clutches C1 70, C2 62, C3 73, and C4 75 are applied for each of the operating range states. A first continuously variable mode, i.e., EVT Mode 1, or M1, is selected by applying clutch C1 70 only in order to "ground" the outer gear member of the third planetary gear set 28. The engine state can be one of ON ('M1_Eng_On') or OFF ('M1_Eng_Off'). A second continuously variable mode, i.e., EVT Mode 2, or M2, is selected by applying clutch C2 62 only to connect the shaft 60 to the carrier of the third planetary gear set 28. The engine state can be one of ON ('M2_Eng_On') or OFF ('M2_Eng_Off'). For purposes of this description, when the engine state is OFF, the engine input speed is equal to zero revolutions per minute ('RPM'), i.e., the engine crankshaft is not rotating. A fixed gear operation provides a fixed ratio operation of input-to-output speed of the transmission 10, i.e., $N_I/N_O$. A first fixed gear operation ('G1') is selected by applying clutches C1 70 and C4 75. A second fixed gear operation ('G2') is selected by applying clutches C1 70 and C2 62. A third fixed gear operation ('G3') is selected by applying clutches C2 62 and C4 75. A fourth fixed gear operation ('G4') is selected by applying clutches C2 62 and C3 73. The fixed ratio operation of input-to-output speed increases with increased fixed gear operation due to decreased gear ratios in the planetary gears 24, 26, and 28. The rotational speeds of the first and second electric machines 56 and 72, $N_A$ and $N_B$ respectively, are dependent on internal rotation of the mechanism as defined by the clutching and are proportional to the input speed measured at the input shaft 12.

In response to operator input via the accelerator pedal 113 and brake pedal 112 as captured by the user interface 13, the HCP 5 and one or more of the other control modules determine torque commands to control the torque generative devices comprising the engine 14 and the first and second electric machines 56 and 72 to meet the operator torque request at the output member 64 and transferred to the driveline 90. Based upon input signals from the user interface 13 and the hybrid powertrain including the ESD 74, the HCP 5 determines the operator torque request, a commanded output torque from the transmission 10 to the driveline 90, the input torque from the engine 14, clutch torques for the torque-transfer clutches C1 70, C2 62, C3 73, C4 75 of the transmission 10; and the motor torques for the first and second electric machines 56 and 72, respectively, as is described hereinbelow.

Final vehicle acceleration can be affected by other factors including, e.g., road load, road grade, and vehicle mass. The engine state and the transmission operating range state are determined based upon operating characteristics of the hybrid powertrain. This includes the operator torque request communicated through the accelerator pedal 113 and brake pedal 112 to the user interface 13 as previously described. The transmission operating range state and the engine state may be predicated on a hybrid powertrain torque demand caused by a command to operate the first and second electric machines 56 and 72 in an electrical energy generating mode or in a torque generating mode. The transmission operating range state and the engine state can be determined by an optimization algorithm or routine which determines optimum system efficiency based upon operator demand for power, battery state of charge, and energy efficiencies of the engine 14 and the first and second electric machines 56 and 72. The control system manages torque inputs from the engine 14 and the first and second electric machines 56 and 72 based upon an outcome of the executed optimization routine, and system efficiencies are optimized thereby, to manage fuel economy and battery charging. Furthermore, operation can be determined based upon a fault in a component or system. The HCP 5 monitors the torque-generative devices, and determines the power output from the transmission 10 at output member 64 that is required to meet the operator torque request while meeting other powertrain operating demands, e.g., charging the ESD 74. As should be apparent from the description above, the ESD 74 and the first and second electric machines 56 and 72 are electrically-operatively coupled for power flow therebetween. Furthermore, the engine 14, the first and second electric machines 56 and 72, and the electro-mechanical transmission 10 are mechanically-operatively coupled to transfer power therebetween to generate a power flow to the output member 64.

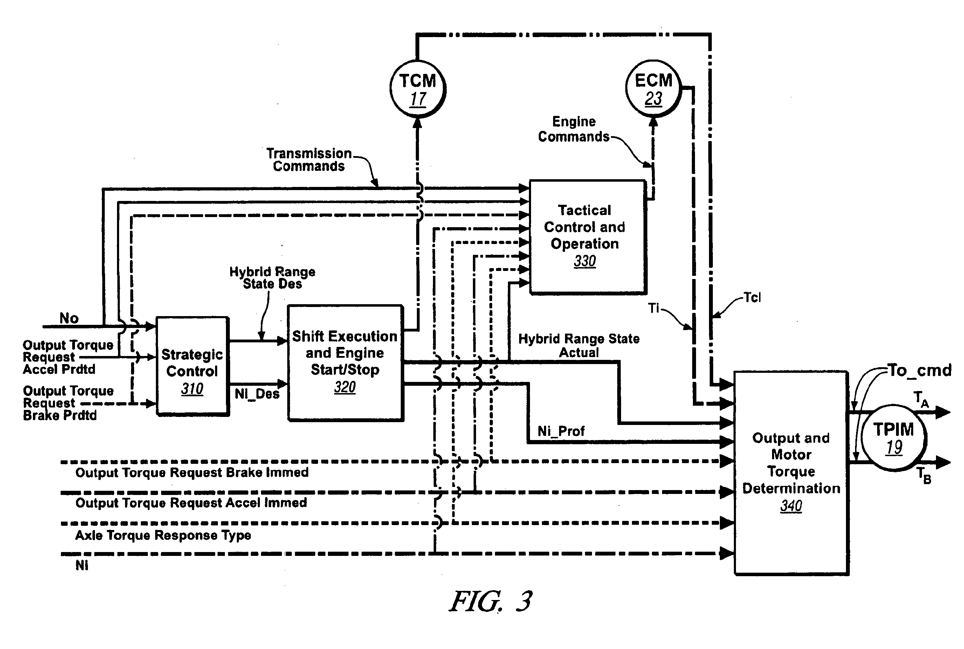

Fig. 3 shows a control system architecture for controlling and managing signal flow in a hybrid powertrain system having multiple torque generative devices, described hereinbelow with reference to the hybrid powertrain system of Figs. 1 and 2, and residing in the aforementioned control modules in the form of executable algorithms and calibrations. The control system architecture is applicable to alternative hybrid powertrain systems having multiple torque generative devices, including, e.g., a hybrid powertrain system having an engine and a single electric machine, a hybrid powertrain system having an engine and multiple electric machines. Alternatively, the hybrid powertrain system can utilize non-electric torque machines and energy storage systems, e.g., hydraulic-mechanical hybrid transmissions using hydraulically powered torque machines (not shown).

In operation, the operator inputs to the accelerator pedal 113 and the brake pedal 112 are monitored to determine the operator torque request. The operator inputs to the accelerator pedal 113 and the brake pedal 112 comprise individually determinable operator torque request inputs including an immediate accelerator output torque request ('Output Torque Request Accel Immed'), a predicted accelerator output torque request ('Output Torque Request Accel Prdtd'), an immediate brake output torque request ('Output Torque Request Brake Immed'), a predicted brake output torque request ('Output Torque Request Brake Prdtd') and an axle torque response type ('Axle Torque Response Type'). As used herein, the term 'accelerator' refers to an operator request for forward propulsion preferably resulting in increasing vehicle speed over the present vehicle speed, when the operator selected position of the transmission gear selector 114 commands operation of the vehicle in the forward direction. The terms 'deceleration' and 'brake' refer to an operator request preferably resulting in decreasing vehicle speed from the present vehicle speed. The immediate accelerator output torque request, the predicted accelerator output torque request, the immediate brake output torque request, the predicted brake output torque request, and the axle torque response type are individual inputs to the control system. Additionally, operation of the engine 14 and the transmission 10 are monitored to determine the input speed ('Ni') and the output speed ('No').

The immediate accelerator output torque request comprises an immediate torque request determined based upon the operator input to the accelerator pedal 113. The control system controls the output torque from the hybrid powertrain system in response to the immediate accelerator output torque request to cause positive acceleration of the vehicle. The immediate brake output torque request comprises an immediate braking request determined based upon the operator input to the brake pedal 112. The control system controls the output torque from the hybrid powertrain system in response to the immediate brake output torque request to cause deceleration, or negative acceleration, of the vehicle. Vehicle deceleration effected by control of the output torque from the hybrid powertrain system is combined with vehicle deceleration effected by a vehicle braking system (not shown) to decelerate the vehicle to achieve the immediate braking request.

The immediate accelerator output torque request is determined based upon a presently occurring operator input to the accelerator pedal 113, and comprises a request to generate an immediate output torque at the output member 64 preferably to accelerate the vehicle. The immediate accelerator output torque request is unshaped, but can be shaped by events that affect vehicle operation outside the powertrain control. Such events include vehicle level interruptions in the powertrain control for antilock braking, traction control and vehicle stability control, which can be used to unshape or rate-limit the immediate accelerator output torque request.

The predicted accelerator output torque request is determined based upon the operator input to the accelerator pedal 113 and comprises an optimum or preferred output torque at the output member 64. The predicted accelerator output torque request is preferably equal to the immediate accelerator output torque request during normal operating conditions, e.g., when any one of antilock braking, traction control, or vehicle stability is not being commanded. When any one of antilock braking, traction control or vehicle stability is being commanded the predicted accelerator output torque request remains the preferred output torque with the immediate accelerator output torque request being decreased in response to output torque commands related to the antilock braking, traction control, or vehicle stability control.

The immediate brake output torque request is determined based upon the operator input to the brake pedal 112 and the control signal to control the friction brakes to generate friction braking torque.

The predicted brake output torque request comprises an optimum or preferred brake output torque at the output member 64 in response to an operator input to the brake pedal 112 subject to a maximum brake output torque generated at the output member 64 allowable regardless of the operator input to the brake pedal 112. In one embodiment the maximum brake output torque generated at the output member 64 is limited to -0.2g. The predicted brake output torque request can be phased out to zero when vehicle speed approaches zero regardless of the operator input to the brake pedal 112. As desired by a user, there can be operating conditions under which the predicted brake output torque request is set to zero, e.g., when the operator setting to the transmission gear selector 114 is set to a reverse gear, and when a transfer case (not shown) is set to a four-wheel drive low range. The operating conditions whereat the predicted brake output torque request is set to zero are those in which blended braking is not preferred due to vehicle operating factors.

The axle torque response type comprises an input state for shaping and rate-limiting the output torque response through the first and second electric machines 56 and 72. The input state for the axle torque response type can be an active state, preferably comprising one of a pleasability limited state a maximum range state, and an inactive state. When the commanded axle torque response type is the active state, the output torque command is the immediate output torque. Preferably the torque response for this response type is as fast as possible.

Blended brake torque includes a combination of the friction braking torque generated at the wheels 93 and the output torque generated at the output member 64 which reacts with the driveline 90 to decelerate the vehicle in response to the operator input to the brake pedal 112. The BrCM 22 commands the friction brakes on the wheels 93 to apply braking force and generates a command for the transmission 10 to create a negative output torque which reacts with the driveline 90 in response to the immediate braking request. Preferably the applied braking force and the negative output torque can decelerate and stop the vehicle so long as they are sufficient to overcome vehicle kinetic power at wheel(s) 93. The negative output torque reacts with the driveline 90, thus transferring torque to the electro-mechanical transmission 10 and the engine 14. The negative output torque reacted through the electro-mechanical transmission 10 can be transferred to the first and second electric machines 56 and 72 to generate electric power for storage in the ESD 74.

A strategic optimization control scheme ('Strategic Control') 310 determines a preferred input speed ('Ni_Des') and a preferred engine state and transmission operating range state ('Hybrid Range State Des') based upon the output speed and the operator torque request and based upon other operating parameters of the hybrid powertrain, including battery power limits and response limits of the engine 14, the transmission 10, and the first and second electric machines 56 and 72. The predicted accelerator output torque request and the predicted brake output torque request are input to the strategic optimization control scheme 310. The strategic optimization control scheme 310 is preferably executed by the HCP 5 during each 100 ms loop cycle and each 25 ms loop cycle. The desired operating range state for the transmission 10 and the desired input speed from the engine 14 to the transmission 10 are inputs to the shift execution and engine start/stop control scheme 320.

The shift execution and engine start/stop control scheme 320 commands changes in the transmission operation ('Transmission Commands') including changing the operating range state based upon the inputs and operation of the powertrain system. This includes commanding execution of a change in the transmission operating range state if the preferred operating range state is different from the present operating range state by commanding changes in application of one or more of the clutches C1 70, C2 62, C3 73, and C4 75 and other transmission commands. The present operating range state ('Hybrid Range State Actual') and an input speed profile ('Ni_Prof') can be determined. The input speed profile is an estimate of an upcoming input speed and preferably comprises a scalar parametric value that is a targeted input speed for the forthcoming loop cycle. The input speed profile is useful during transmission shifting, in order to determine a target engine speed to achieve an input speed that effect synchronous clutch speed to minimize clutch slippage.

A tactical control scheme ('Tactical Control and Operation') 330 is repeatedly executed during one of the control loop cycles to determine engine commands ('Engine Commands') for operating the engine 14, including a preferred input torque from the engine 14 to the transmission 10 based upon the output speed, the input speed, and the operator torque request comprising the immediate accelerator output torque request, the predicted accelerator output torque request, the immediate brake output torque request, the predicted brake output torque request, the axle torque response type, and the present operating range state for the transmission. The engine commands also include engine states including one of an all-cylinder operating state and a cylinder deactivation operating state wherein a portion of the engine cylinders are deactivated and unfueled, and engine states including one of a fueled state and a fuel cutoff state. An engine command comprising the preferred input torque of the engine 14 and a present input torque ('Ti') reacting between the engine 14 and the input member 12 are preferably determined in the ECM 23. Clutch torques ('Tcl') for each of the clutches C1 70, C2 62, C3 73, and C4 75, including the presently applied clutches and the non-applied clutches are estimated, preferably in the TCM 17.

An output and motor torque determination scheme ('Output and Motor Torque Determination') 340 is executed to achieve the preferred output torque from the powertrain ('To_cmd'). This includes determining motor torque commands ('$T_A$', '$T_B$') to transfer a net commanded output torque to the output member 64 of the transmission 10 that meets the operator torque request, by controlling the first and second electric machines 56 and 72 in this embodiment. The immediate accelerator output torque request, the immediate brake output torque request, the present input torque from the engine 14 and the estimated applied clutch torque(s), the present operating range state of the transmission 10, the input speed, the input speed profile, and the axle torque response type are inputs. The output and motor torque determination scheme 340 executes to determine the motor torque commands during each iteration of one of the loop cycles. The output and motor torque determination scheme 340 includes algorithmic code which is regularly executed during the 6.25 ms and 12.5 ms loop cycles to determine the preferred motor torque commands.

The hybrid powertrain is controlled to transfer the output torque to the output member 64 to react with the driveline 90 to generate tractive torque at wheel(s) 93 to forwardly propel the vehicle in response to the operator input to the accelerator pedal 113 when the operator selected position of the transmission gear selector 114 commands operation of the vehicle in the forward direction. Similarly, the hybrid powertrain is controlled to transfer the output torque to the output member 64 to react with the driveline 90 to generate tractive torque at wheel(s) 93 to propel the vehicle in a reverse direction in response to the operator input to the accelerator pedal 113 when the operator selected position of the transmission gear selector 114 commands operation of the vehicle in the reverse direction. Preferably, propelling the vehicle results in vehicle acceleration so long as the output torque is sufficient to overcome external loads on the vehicle, e.g., due to road grade, aerodynamic loads, and other loads.

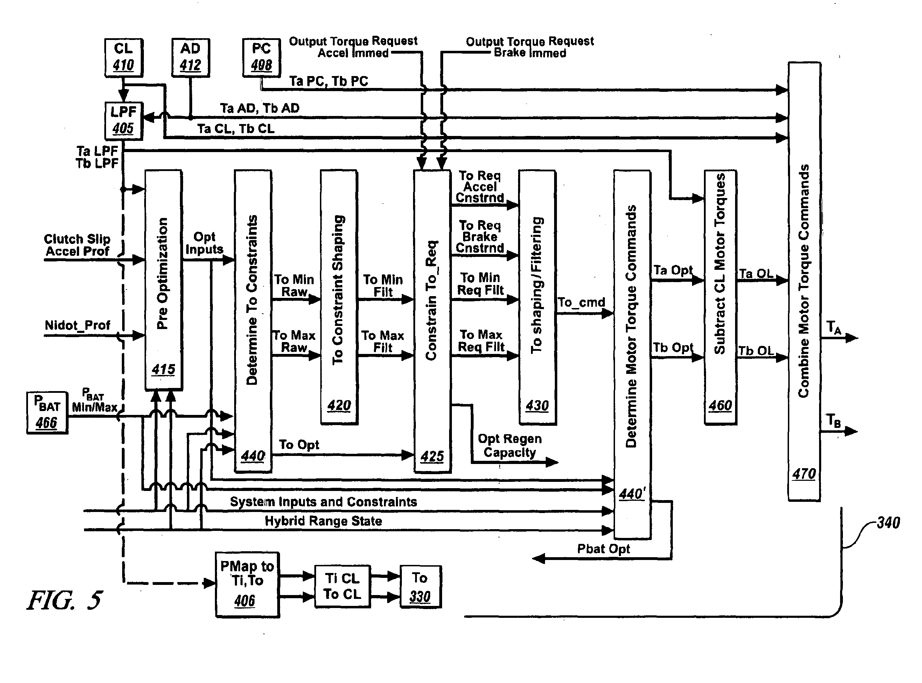

Fig. 5 details signal flow for the output and motor torque determination scheme 340 for controlling and managing the output torque through the first and second electric machines 56 and 72, described with reference to the hybrid powertrain system of Figs. 1 and 2 and the control system architecture of Fig. 3. The output and motor torque determination scheme 340 controls the motor torque commands of the first and second electric machines 56 and 72 to transfer a net output torque to the output member 64 of the transmission 10 that reacts with the driveline 90 and meets the operator torque request, subject to constraints and shaping. The output and motor torque determination scheme 340 preferably includes algorithmic code and predetermined calibration code which is regularly executed during the 6.25 ms and 12.5 ms loop cycles to determine preferred motor torque commands ('$T_A$', '$T_B$') for controlling the first and second electric machines 56 and 72 in this embodiment.

The output and motor torque determination scheme 340 determines and uses a plurality of inputs to determine constraints on the output torque, from which it determines the output torque command ('To_cmd'). The motor torque commands ('$T_A$', '$T_B$') for the first and second electric machines 56 and 72 can be determined based upon the output torque command. The inputs to the output and motor torque determination scheme 340 include operator inputs, powertrain system inputs and constraints, and autonomic control inputs.

The operator inputs include the immediate accelerator output torque request ('Output Torque Request Accel Immed') and the immediate brake output torque request ('Output Torque Request Brake Immed').

The autonomic control inputs include motor torque offsets to effect active damping of the driveline 90 (412), to effect engine pulse cancellation (408), and to effect a closed loop correction based upon the input and clutch slip speeds (410). The motor torque offsets for the first and second electric machines 56 and 72 to effect active damping of the driveline 90 can be determined ('Ta AD', 'Tb AD'), e.g., to manage and effect driveline lash adjustment, and are output from an active damping algorithm ('AD') (412). The active damping comprises adjustments to the motor torques to maintain minimum torque on components of the driveline 90 at low speed and low torque operating conditions to prevent driveline clunk. The motor torque offsets to effect engine pulse cancellation ('Ta PC', 'Tb PC') are determined during starting and stopping of the engine during transitions between the engine-on state ('ON') and the engine-off state ('OFF') to cancel engine torque disturbances, and are output from a pulse cancellation algorithm ('PC') (408).

The motor torque offsets for the first and second electric machines 56 and 72 to effect closed-loop correction torque are determined by monitoring input speed to the transmission 10 and clutch slip speeds of clutches C1 70, C2 62, C3 73, and C4 75. The closed-loop correction motor torque offsets for the first and second electric machines 56 and 72 ('Ta CL', 'Tb CL') can be determined based upon an input speed error, i.e., a difference between the input speed from sensor 11 ('Ni') and the input speed profile ('Ni_Prof'), and a clutch slip speed error, i.e., a difference between clutch slip speed and a targeted clutch slip speed, e.g., a clutch slip speed profile for a targeted clutch C1 70. When operating in one of the mode operating range states, the closed-loop correction motor torque offsets for the first and second electric machines 56 and 72 ('Ta CL', 'Tb CL') can be determined primarily based upon the input speed error. When operating in Neutral, the closed-loop correction is based upon the input speed error and the clutch slip speed error for a targeted clutch, e.g., C1 70. The closed-loop correction motor torque offsets are output from a closed loop control algorithm ('CL') (410). The clutch slip speeds of the non-applied clutches can be determined for the specific operating range state based upon motor speeds for the first and second electric machines 56 and 72 and the speed of the output member 64. The targeted clutch slip speed and clutch slip profile are preferably used during a transition in the operating range state of the transmission to synchronize clutch slip speed prior to applying an oncoming clutch. The closed-loop motor torque offsets and the motor torque offsets to effect active damping of the driveline 90 are input to a low pass filter ('LPF') 405 to determine filtered motor torque corrections for the first and second electric machines 56 and 72 ('Ta LPF' and Tb LPF').

The motor torque offsets for the first and second electric machines 56 and 72 are converted to a corresponding input torque offset $T_I$ CL and an output torque offset $T_O$ CL using a linear transformation ('PMap to Ti, To') (406). The linear transformation comprises a transformation from the motor torques, e.g., the filtered motor torque corrections for the first and second electric machines 56 and 72 ('Ta LPF' and Tb LPF'), to a corresponding input torque $T_I$ and output torque $T_O$. The relationship between the motor torques and the input and output torque is set forth below:

$$\begin{bmatrix} T_I CL \\ T_O CL \end{bmatrix} = \begin{bmatrix} a11 & a12 \\ a21 & a22 \end{bmatrix} * \begin{bmatrix} T_a LPF \\ T_b LPF \end{bmatrix} \qquad [1]$$

wherein the terms a11, a12, a21, a22 are based upon a physical relationship between elements of the transmission 14 to transfer power between the input member 12 and the output member 64 including independently controllable elements including the motor torques and input and output speeds of the transmission 14 and dependent upon the operating range state of the transmission 14.

The relationship of Eq. 1 is expressed in Eqs. 2 and 3 and calibrated and reduced to algorithmic code for execution preferably in the HCP 5. When the transmission 14 is in one of the fixed gear operating range states, the linear transformation is set forth below:

$$T_a LPF = \begin{bmatrix} b1 & b2 & b3 & b4 \end{bmatrix} \begin{bmatrix} T_I CL \\ T_a LPF \\ T_O CL \\ \dot{N}_I \end{bmatrix} \qquad [2]$$

wherein b1-b4 are calibratable scalar values, as described with reference to a11-a22, and $\dot{N}_I$ is a time-rate change in the input speed of the input member 12.

When the transmission 14 is in one of the mode operating range states, the torque converter map is set forth below:

$$\begin{bmatrix} T_a LPF \\ T_b LPF \end{bmatrix} = \begin{bmatrix} c11 & c12 & c13 & c14 \\ c21 & c22 & c23 & c24 \end{bmatrix} \begin{bmatrix} T_I CL \\ T_O CL \\ \dot{N}_I \\ \dot{N}_O \end{bmatrix} \qquad [3]$$

wherein a11- a24 are calibratable scalar values, and $\dot{N}_O$ is a time-rate change in the output speed. Thus, the total motor torque offsets for the first and second electric machines 56 and 72 due to engine input power can be linearly transformed to the input and output torque offsets $T_I CL$ and $T_O CL$ that are input to the tactical control scheme 330.

Other aspects of the output and motor torque determination scheme 340 are now described. Inputs including an input acceleration profile ('Nidot_Prof') and a clutch slip acceleration profile ("Clutch Slip Accel Prof') are input to a pre-optimization algorithm (415), along with the system inputs, the operating range state, and the motor torque corrections for the first and second electric machines 56 and 72 ('Ta LPF' and 'Tb LPF'). The input acceleration profile is an estimate of an upcoming input acceleration that preferably comprises a targeted input acceleration for the forthcoming loop cycle. The clutch slip acceleration profile is an estimate of upcoming clutch acceleration for one or more of the non-applied clutches, and preferably comprises a targeted clutch slip acceleration for the forthcoming loop cycle. Optimization inputs ('Opt Inputs'), which can include values for motor torques, clutch torques and output torques can be calculated for the present operating range state and used in an optimization algorithm (440). The optimization algorithm (440) is preferably executed to determine the maximum and minimum raw output torque constraints (440) and to determine the preferred split of open-loop torque commands between the first and second electric machines 56 and 72 (440'). The optimization inputs, the maximum and minimum battery power limits, the system inputs and the present operating range state are analyzed to determine a preferred or optimum output torque ('To Opt') and minimum and maximum raw output torque constraints ('To Min Raw', 'To Max Raw') which can be shaped and filtered (420). The preferred output torque ('To Opt') comprises an output torque that minimizes battery power subject to a range of net output torques that are less than the immediate accelerator output torque request. The preferred output torque comprises the net output torque that is less than the immediate accelerator output torque request and yields the minimum battery power subject to the output torque constraints. The immediate accelerator output torque request and the immediate brake output torque request are each shaped and filtered and subjected to the minimum and maximum output torque constraints ('To Min Filt', 'To Max Filt') to determine minimum and maximum filtered output torque request constraints ('To Min Req Filt', 'To Max Req Filt'). A constrained accelerator output torque request ('To Req Accel Cnstrnd') and a constrained brake output torque request ('To Req Brake Cnstrnd') can be determined based upon the minimum and maximum filtered output torque request constraints (425).

Furthermore, a regenerative braking capacity ('Opt Regen Capacity') of the transmission 10 comprises a capacity of the transmission 10 to react driveline torque, and can be determined based upon constraints including maximum and minimum motor torque outputs from the torque machines and maximum and minimum reactive torques for the applied clutches, taking into account the battery power limits. The regenerative braking capacity establishes a maximum value for the immediate brake output torque request. The regenerative braking capacity is determined based upon a difference between the constrained accelerator output torque request and the preferred output torque ('To Opt'). The constrained accelerator output torque request is shaped and filtered and combined with a constrained, shaped, and filtered brake output torque request to determine a net output torque command. The net output torque command is compared to the minimum and maximum request filtered output torques to determine the output torque command ('To_ cmd') (430). When the net output torque command is between the maximum and minimum request filtered output torques, the output torque command is set to the net output torque command. When the net output torque command exceeds the maximum request filtered output torque, the output torque command is set to the maximum request filtered output torque. When the net output torque command is less than the minimum request filtered output torque, the output torque command is set to the minimum request filtered output torque command.

Powertrain operation is monitored and combined with the output torque command to determine a preferred split of open-loop torque commands between the first and second electric machines 56 and 72 that meets reactive clutch torque capacities ('TaOpt' and 'Tb Opt'), and provide feedback related to the preferred battery power ('Pbat Opt') (440'). The motor torque corrections for the first and second electric machines 56 and 72 ('Ta LPF' and Tb LPF') are subtracted to determine open loop motor torque commands ('Ta OL' and 'Tb OL') (460).

The open loop motor torque commands are combined with the autonomic control inputs including the motor torque offsets to effect active damping of the driveline 90 (412), to effect engine pulse cancellation (408), and to effect a closed loop correction based upon the input and clutch slip speeds (410), to determine the motor torques $T_A$ and $T_B$ for controlling the first and second electric machines 56 and 72 (470). The aforementioned steps of constraining, shaping and filtering the output torque request to determine the output torque command which is converted into the torque commands for the first and second electric machines 56 and 72 is preferably a feed-forward operation which acts upon the inputs and uses algorithmic code to calculate the torque commands.

The system operation as configured leads to determining output torque constraints based upon present operation and constraints of the powertrain system. The operator torque request is determined based upon operator inputs to the brake pedal and to the accelerator pedal. The operator torque request can be constrained, shaped and filtered to determine the output torque command, including determining a preferred regenerative braking capacity. An output torque command can be determined that is constrained based upon the constraints and the operator torque request. The output torque command is implemented by commanding operation of the torque machines. The system operation effects powertrain operation that is responsive to the operator torque request and within system constraints. The system operation results in an output torque shaped with reference to operator driveability demands, including smooth operation during regenerative braking operation.

The optimization algorithm (440, 440') comprises an algorithm executed to determine powertrain system control parameters that are responsive to the operator torque request that minimizes battery power consumption. The optimization algorithm (440, 440') includes monitoring present operating conditions of the electro-mechanical hybrid powertrain, e.g., the powertrain system described hereinabove, based upon the system inputs and constraints, the present operating range state, and the available battery power limits. For a candidate input torque, the optimization algorithm (440, 440') calculates powertrain system outputs that are responsive to the system inputs comprising the aforementioned output torque commands and are within the maximum and minimum motor torque outputs from the first and second electric machines 56 and 72, and within the available battery power, and within the range of clutch reactive torques from the applied clutches for the present operating range state of the transmission 10, and take into account the system inertias, damping, clutch slippages, and electric/mechanical power conversion efficiencies. Preferably, the powertrain system outputs include the preferred output torque ('To Opt'), achievable torque outputs from the first and second electric machines 56 and 72 ('Ta Opt', 'Tb Opt') and the preferred battery power ('Pbat Opt') associated with the achievable torque outputs.

The constraints on the output torque request (440) comprising maximum and minimum unfiltered output torques are determined based upon inputs including the input speed, output speed, motor torque constraints, reactive clutch torque constraints for the applied clutches, and input and output accelerations. The preferred output torque is subject to the output torque constraints and is determined based upon the range of allowable output torques, which can vary, and may include the immediate accelerator output torque request. The preferred output torque may comprise an output torque corresponding to a minimum battery discharge power or an output torque corresponding to a maximum battery charge power. The preferred output torque is based upon a capacity of the powertrain to transmit and convert electric power to mechanical torque through the first and second electric machines 56 and 72, and the immediate or present torque, speed, and reactive clutch torque constraints, and electric power inputs thereto. During ongoing operation, the control system uses the control schemes to control the powertrain system described herein by determining and adapting the input torque from the engine 14 and the engine state using feed-forward control. The operator inputs to the accelerator pedal and the brake pedal are monitored to determine the output torque request, or the operator torque request.

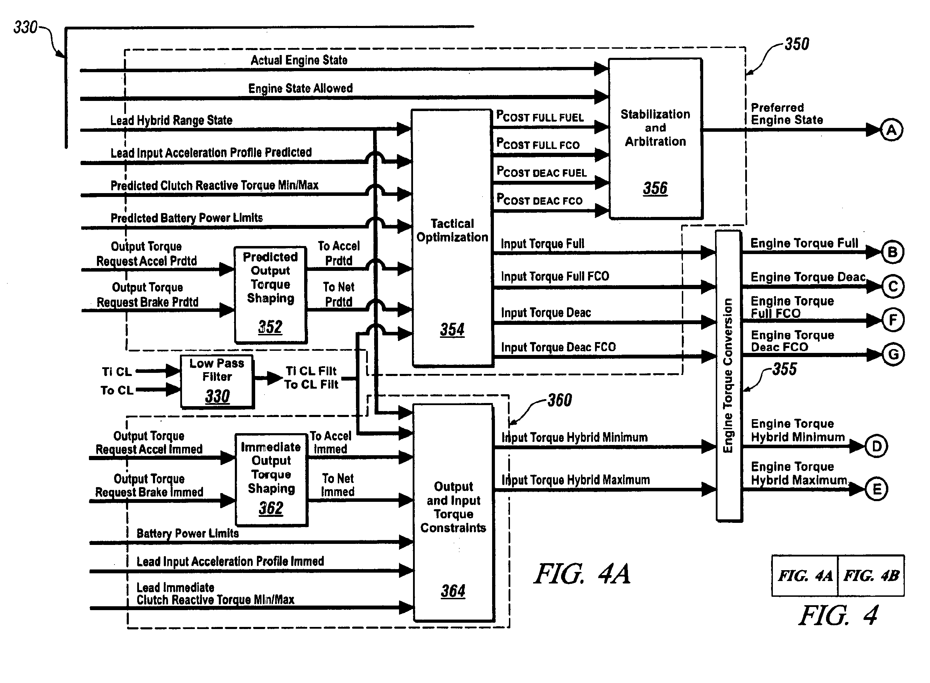

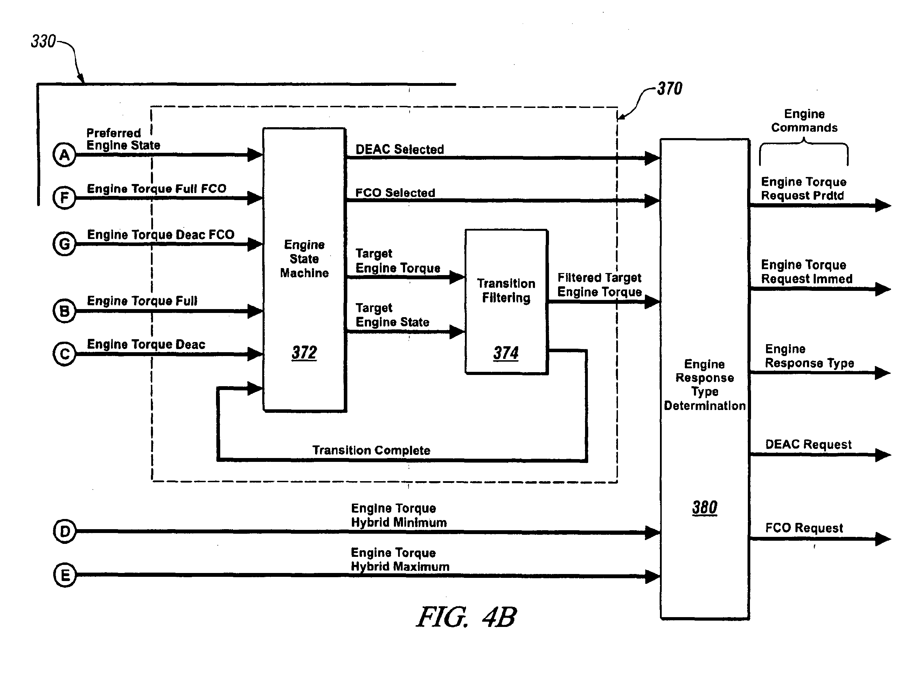

Fig. 4 details the tactical control scheme ('Tactical Control and Operation') 330 for controlling operation of the engine 14, described with reference to the hybrid powertrain system of Figs. 1 and 2 and the control system architecture of Fig. 3. The tactical control scheme 330 includes a tactical optimization control path 350 and a system constraints control path 360 which are preferably executed concurrently. The outputs of the tactical optimization control path 350 are input to an engine state control scheme 370. The outputs of the engine state control scheme 370 and the system constraints control path 360 are input to an engine response type determination scheme ('Engine Response Type Determination') 380 for controlling the engine state, the immediate engine torque request and the predicted engine torque request.

The operating point of the engine 14 as described in terms of the input torque and input speed that can be achieved by controlling mass of intake air to the engine 14 when the engine 14 comprises a spark-ignition engine by controlling position of an engine throttle (not shown) utilizing an electronic throttle control device (not shown). This includes opening the throttle to increase the engine input speed and torque output and closing the throttle to decrease the engine input speed and torque. The engine operating point can be achieved by adjusting ignition timing, generally by retarding spark timing from a mean-best-torque spark timing to decrease engine torque.

When the engine 14 comprises a compression-ignition engine, the operating point of the engine 14 can be achieved by controlling the mass of injected fuel, and adjusted by retarding injection timing from a mean-best-torque injection timing to decrease engine torque.

The engine operating point can be achieved by changing the engine state between the engine-off state and the engine-on state. The engine operating point can be achieved by controlling the engine state between the all-cylinder state and the cylinder deactivation state, wherein a portion of the engine cylinders are unfueled and the engine valves are deactivated. The engine state can include the fuel cutoff state wherein the engine is rotating and unfueled to effect engine braking.

The input and output torque offsets $T_I$ CL and $T_O$ CL are input to a low pass filter 335 of the tactical control scheme 330, yielding filtered input and output torque offsets $T_I$ CL Filt and $T_O$ CL Filt that are input to the tactical optimization control path 350 and to the system constraints control path 360.

The tactical optimization control path 350 acts on substantially steady-state inputs to select a preferred engine state and determine a preferred input torque from the engine 14 to the transmission 10. The tactical optimization control path 350 includes an optimization scheme ('Tactical Optimization') 354 to determine preferred input torques for operating the engine 14 in the all-cylinder state ('Input Torque Full'), in the cylinder deactivation state ('Input Torque Deac'), the all-cylinder state with fuel cutoff ('Input Torque Full FCO'), in the cylinder deactivation state with fuel cutoff ('Input Torque Deac FCO'), and a preferred engine state ('Engine State').

Inputs to the optimization scheme 354 include the filtered input and output torque offsets $T_I$CL Filt and $T_O$CL Filt, a lead operating range state of the transmission 10 ('Lead Hybrid Range State') a lead predicted input acceleration profile ('Lead Input Acceleration Profile Predicted'), a predicted range of clutch reactive torques ('Predicted Clutch Reactive Torque Min/Max') across each applied clutch in the lead operating range state, and predicted battery power limits ('Predicted Battery Power Limits').

The predicted output torque requests for acceleration and braking are combined and shaped with the axle torque response type through a predicted output torque shaping filter 352 to yield a net predicted output torque ('To Net Prdtd') and a predicted accelerator output torque ('To Accel Prdtd'), which are inputs to the optimization scheme 354, and adjusted with the filtered output torque offset $T_O$CL Filt. The lead operating range state of the transmission 10 comprises a time-shifted lead of the operating range state of the transmission 10 to accommodate a response time lag between a commanded change in the operating range state and the actual operating range state. Thus the lead operating range state of the transmission 10 is the commanded operating range state. The lead predicted input acceleration profile comprises a time-shifted lead of the predicted input acceleration profile of the input member 12 to accommodate a response time lag between a commanded change in the predicted input acceleration profile and a measured change in the predicted input acceleration profile. Thus the lead predicted input acceleration profile is the predicted input acceleration profile of the input member 12 occurring after the time shift. The parameters designated as 'lead' are used to accommodate concurrent transfer of torque through the powertrain converging at the common output member 64 using devices having varying response times. Specifically, the engine 14 can have a response time of an order of magnitude of 300- 600 ms, and each of the torque transfer clutches C1 70, C2 62, C3 73, and C4 75 can have response times of an order of magnitude of 150-300 ms, and the first and second electric machines 56 and 72 can have response time of an order of magnitude of 10 ms.

The optimization scheme 354 determines costs for operating the engine 14 in each of the engine states, which comprise operating the engine fueled and in the all-cylinder state ('$P_{COST\ FULL\ FUEL}$'), operating the engine unfueled and in the all-cylinder state ('$P_{COST\ FULL\ FCO}$'), operating the engine fueled and in cylinder deactivation state ('$P_{COST\ DEAC\ FUEL}$'), and operating the engine unfueled and in the cylinder deactivation state ('$P_{COST\ DEAC\ FCO}$'). The aforementioned costs for operating the engine 14 are input to a stabilization analysis scheme ('Stabilization and Arbitration') 356 along with the actual engine state ('Actual Engine State') and an allowable or permissible engine state ('Engine State Allowed') to select one of the engine states as the preferred engine state ('Optimal Engine State').

The preferred input torques for operating the engine 14 in the all-cylinder state and in the cylinder deactivation state with and without fuel cutoff are input to an engine torque conversion calculator 355 and converted to preferred engine torques in the all-cylinder state and in the cylinder deactivation state ('Optimal Engine Torque Full') and ('Optimal Engine Torque Deac') and with fuel cutoff in the all-cylinder state and in the cylinder deactivation state ('Engine Torque Full FCO') and ('Engine Torque Deac FCO') respectively, by taking into account parasitic and other loads introduced between the engine 14 and the transmission 10. The preferred engine torques and the preferred engine state comprise inputs to the engine state control scheme 370.

The costs for operating the engine 14 include operating costs which are determined based upon factors that include vehicle driveability, fuel economy, emissions, and battery usage. Costs are assigned and associated with fuel and electrical power consumption and are associated with a specific operating points of the hybrid powertrain. Lower operating costs can be associated with lower fuel consumption at high conversion efficiencies, lower battery power usage, and lower emissions for each engine speed/load operating point, and take into account the present operating state of the engine 14.

The preferred engine state and the preferred engine torques are input to the engine state control scheme 370, which includes an engine state machine ('Engine State Machine') 372. The engine state machine 372 determines a target engine torque ('Target Engine Torque') and an engine state ('Engine State') based upon the preferred engine torques and the preferred engine state. The target engine torque and the target engine state are input to a transition filter 374 which monitors any commanded transition in the engine state and filters the target engine torque to provide a filtered target engine torque ('Filtered Target Engine Torque'). The engine state machine 372 outputs a command that indicates selection of one of the cylinder deactivation state and the all-cylinder state ('DEAC Selected') and indicates selection of one of the engine-fueled state and the deceleration fuel cutoff state ('FCO Selected'). The selection of one of the cylinder deactivation state and the all-cylinder state and the selection of one of the engine-fueled state and the deceleration fuel cutoff state, the filtered target engine torque, and the minimum and maximum engine torques are input to the engine response type determination scheme 380.

The system constraints control path 360 determines constraints on the input torque, comprising minimum and maximum input torques ('Input Torque Hybrid Minimum' and 'Input Torque Hybrid Maximum') that can be reacted by the transmission 10. The minimum and maximum input torques are determined based upon constraints to the transmission 10 and the first and second electric machines 56 and 72, including clutch torques and battery power limits, which affect the capacity of the transmission 10 to react input torque during the current loop cycle. Inputs to the system constraints control path 360 include the immediate output torque request as measured by the accelerator pedal 113 ('Output Torque Request Accel Immed') and the immediate output torque request as measured by the brake pedal 112 ('Output Torque Request Brake Immed') which are combined and shaped with the axle torque response type through an immediate output torque shaping filter 362 to yield a net immediate output torque ('To Net Immed') and an immediate accelerator output torque ('To Accel Immed'). The net immediate output torque and the immediate accelerator output torque are inputs to a constraints scheme ('Output and Input Torque Constraints') 364. Other inputs to the constraints scheme 364 include the lead operating range state of the transmission 10, an immediate lead input acceleration profile ('Lead Input Acceleration Profile Immed'), a lead immediate clutch reactive torque range ('Lead Immediate Clutch Reactive Torque Min/Max') for each applied clutch in the lead operating range state, and the available battery power ('Battery Power Limits') comprising the range $P_{BAT\_MIN}$ to $P_{BAT\_MAX}$. The filtered input and output torque offsets $T_ICL$ Filt and $T_OCL$ Filt are also inputs.

A targeted lead input acceleration profile comprises a time-shifted lead of the immediate input acceleration profile of the input member 12 to accommodate a response time lag between a commanded change in the immediate input acceleration profile and a measured change in the immediate input acceleration profile. The lead immediate clutch reactive torque range comprises a time-shifted lead of the immediate clutch reactive torque range of the clutches to accommodate a response time lag between a commanded change in the immediate clutch torque range and a measured change in the immediate clutch reactive torque range. The constraints scheme 364 determines an output torque range for the transmission 10 comprising maximum and minimum output torques that are achievable based upon constraints imposed by the system operation as described, including the output torque offsets $T_ICL$ Filt and $T_OCL$ Filt. The constraints scheme 364 then determines the minimum and maximum input torques that can be reacted by the transmission 10 based upon the aforementioned inputs and the output torque range for the transmission 10 comprising the maximum and minimum achievable output torques.

The minimum and maximum input torques are input to the engine torque conversion calculator 355 and converted to minimum and maximum engine torques ('Engine Torque Hybrid Minimum' and 'Engine Torque Hybrid Maximum' respectively), by taking into account parasitic and other loads introduced between the engine 14 and the transmission 10.

The filtered target engine torque, the output of the engine state machine 372 and the engine minimum and maximum engine torques are input to the engine response type determination scheme 380, which inputs the engine commands to the ECM 23 for controlling the engine state, the immediate engine torque request and the predicted engine torque request. The engine commands include an immediate engine torque request ('Engine Torque Request Immed') and a predicted engine torque request ('Engine Torque Request Prdtd') that can be determined based upon the filtered target engine torque. Other commands control the engine state to one of the engine fueled state and the deceleration fuel cutoff state ('FCO Request') and to one of the cylinder deactivation state and the all-cylinder state ('DEAC Request'). Another output comprises an engine response type ('Engine Response Type'). When the filtered target engine torque is within the range between the minimum and maximum engine torques, the engine response type is inactive. When the filtered target engine torque is outside the constraints of the minimum and maximum engine torques ('Engine Torque Hybrid Minimum') and ('Engine Torque Hybrid Maximum') the engine response type is active, indicating a need for an immediate change in the engine torque, e.g., through engine spark control and retard to change the engine torque and the input torque to fall within the constraints of the minimum and maximum engine torques.

The operating system as described commands input torque from the engine and motor torques from the first and second electric machines 56 and 72 to achieve the preferred output torque in response to the operator torque request. When there is an error in the input torque from the engine 14 to the hybrid transmission 10, the output and motor torque determination scheme 340 executes to achieve the preferred output torque, including adjusting motor torque commands for the first and second electric machines 56 and 72, which can result in excessive charging or discharging of the ESD 74. Errors in the input torque from the engine 14 can be based upon incorrect engine input torque estimates and errors in mechanical spin losses. Thus, the system as described can be used to determine errors in the input from the engine, as evidenced by errors in the input speed and errors in clutch slip speed, and can adjust operation of the engine 14 to minimize and eliminate excessive charging or discharging of the ESD 74. Adjusting operation of the engine 14 includes changing the engine operation to change input torque from the engine 14 to the transmission 10, changing the engine state to change engine operating efficiency, and changing constraints on the engine operation to effect changes in the engine state and the engine operating point and forestall excessive charging or discharging of the ESD 74.

**Claims**

1. Method for controlling a powertrain comprising an engine (14) coupled to an input member (12) of a hybrid transmission (10), the hybrid transmission (10) operative to transfer power between an input member (12) and a plurality of torque machines (56, 72) and an output member (64) coupled to a driveline (90) through selective actuation of a plurality of torque clutches (C1-C4), the method comprising:

monitoring operation of the hybrid transmission (10);
determining motor torque offsets for the torque machines (56, 72);
transforming the motor torque offsets for the torque machines (56, 72) to an input torque offset and an output torque offset of the hybrid transmission (10); and

adjusting operation of the engine (14) based upon the input torque offset and the output torque offset of the hybrid transmission (10),

**characterized in that**

the input speed of the input member (12) is monitored,

a clutch slip speed is determined for one of the torque transfer clutches (C1-C4),

a target input speed and a target clutch slip speed is determined, and

the motor torque offsets for the torque machines (56, 72) are determined based upon a difference between the input speed and the target input speed and a difference between the clutch slip speed and the target clutch slip speed.

2. The method of claim 1, further comprising adjusting a preferred input torque from the engine (14) to the input member (12) based upon the input torque offset and the output torque offset of the hybrid transmission (10).

3. The method of claim 2, further comprising adjusting a preferred engine state based upon the input torque offset and the output torque offset of the hybrid transmission (10).

4. The method of claim 1, comprising adjusting input torque constraints to the hybrid transmission (10) based upon the input torque offset and the output torque offset of the hybrid transmission (10).

5. The method of claim 1, wherein the plurality of torque machines (56, 72) is connected to an energy storage device (74), the method further comprising:

monitoring operator inputs to an accelerator pedal (113) and to a brake pedal (112);

determining an output torque request based upon the operator inputs to the accelerator pedal (113) and to the brake pedal (112); and

adjusting the input torque from the engine (14) to the transmission (10) and selecting a preferred engine state based upon the input torque offset and the output torque offset to the transmission (10).

6. The method of claim 1, the method further comprising:

controlling power flow between the engine the torque machines, the energy storage device, and the output member to achieve the output torque command based upon the adjusted operation of the engine.

**Patentansprüche**

1. Verfahren zum Steuern eines Antriebsstrangs, der eine Kraftmaschine (14) umfasst, die mit einem Eingangselement (12) eines Hybridgetriebes (10) gekoppelt ist, wobei das Hybridgetriebe (10) dazu dient, Leistung zwischen einem Eingangselement (12) und einer Mehrzahl von Drehmomentmaschinen (56, 72) und einem Ausgangselement (64), das mit einem Endantrieb (90) gekoppelt ist, durch selektive Betätigung einer Mehrzahl von Drehmomentkupplungen (C1 - C4) zu übertragen, wobei das Verfahren umfasst:

Überwachen des Betriebs des Hybridgetriebes (10);

Ermitteln von Motordrehmomentverschiebungen für die Drehmomentmaschinen (56, 72);

Umwandeln der Motordrehmomentverschiebungen für die Drehmomentmaschinen (56, 72) in eine Eingangsdrehmomentverschiebung und eine Ausgangsdrehmomentverschiebung des Hybridgetriebes (10); und

Einstellen des Betriebs der Kraftmaschine (14) auf der Basis der Eingangsdrehmomentverschiebung und der Ausgangsdrehmomentverschiebung des Hybridgetriebes (10),

**dadurch gekennzeichnet, dass**

die Eingangsdrehzahl des Eingangselements (12) überwacht wird,

eine Kupplungsschlupfdrehzahl für eine der Drehmomentübertragungskupplungen (C1 - C4) ermittelt wird,

eine Soll-Eingangsdrehzahl und eine Soll-Kupplungsschlupfdrehzahl ermittelt werden, und

die Motordrehmomentverschiebungen für die Drehmomentmaschinen (56, 72) auf der Basis einer Differenz zwischen der Eingangsdrehzahl und der Soll-Eingangsdrehzahl und einer Differenz zwischen der Kupplungsschlupfdrehzahl und der Soll-Kupplungsschlupfdrehzahl ermittelt werden.

2. Verfahren nach Anspruch 1,

das ferner das Einstellen eines bevorzugten Eingangsdrehmoments von der Kraftmaschine (14) in das Eingangselement (12) auf der Basis der Eingangsdrehmomentverschiebung und der Ausgangsdrehmomentverschiebung des Hybridgetriebes (10) umfasst.

3. Verfahren nach Anspruch 2,
das ferner das Einstellen eines bevorzugten Kraftmaschinenzustands auf der Basis der Eingangsdrehmomentverschiebung und der Ausgangsdrehmomentverschiebung des Hybridgetriebes (10) umfasst.

4. Verfahren nach Anspruch 1,
dass das Einstellen der Eingangsdrehmomenteinschränkungen für das Hybridgetriebe (10) auf der Basis der Eingangsdrehmomentverschiebung und der Ausgangsdrehmomentverschiebung des Hybridgetriebes (10) umfasst.

5. Verfahren nach Anspruch 1,
wobei die Mehrzahl von Drehmomentmaschinen (56, 72) mit einer Energiespeichereinrichtung (74) verbunden ist,
wobei das Verfahren ferner umfasst:

Überwachen von Bedienereingängen in ein Gaspedal (113) und in ein Bremspedal (112);
Ermitteln einer Ausgangsdrehmomentanforderung auf der Basis der Bedienereingänge in das Gaspedal (113) und in das Bremspedal (112); und
Einstellen des Eingangsdrehmoments von der Kraftmaschine (14) in das Getriebe (10) und Auswählen eines bevorzugten Kraftmaschinenzustands auf der Basis der Eingangsdrehmomentverschiebung und der Ausgangsdrehmomentverschiebung des Getriebes (10).

6. Verfahren nach Anspruch 1, wobei das Verfahren ferner umfasst:

Steuern des Leistungsflusses zwischen der Kraftmaschine, den Drehmomentmaschinen, der Energiespeichereinrichtung und dem Ausgangselement, um den Ausgangsdrehmomentbefehl auf der Basis des eingestellten Betriebes der Kraftmaschine zu erreichen.

## Revendications

1. Procédé pour commander un groupe motopropulseur comprenant un moteur (14) couplé à un élément d'entrée (12) d'une transmission hybride (10), la transmission hybride (10) ayant pour fonction de transférer une puissance entre un élément d'entrée (12) et une pluralité de machines-couple (56, 72) et un élément d'entraînement (64) couplé à une ligne d'entraînement (90) par actionnement sélectif d'une pluralité d'embrayages de couple (C1-C4), le procédé comprenant les opérations consistant à :

surveiller le fonctionnement de la transmission hybride (10) ;
déterminer des décalages de couple moteur pour les machines-couple (56, 72) ;
transformer les décalages de couple moteur pour les machines-couple (56, 72) en un décalage de couple d'entrée et un décalage de couple de sortie de la transmission hybride (10) ; et
ajuster le fonctionnement du moteur (14) sur la base du décalage de couple d'entrée et du décalage de couple de sortie de la transmission hybride (10),
**caractérisé en ce que**
la vitesse d'entrée de l'élément d'entrée (12) est surveillée,
une vitesse de glissement d'embrayage est déterminée pour l'un des embrayages de transfert de couple (C1-C4),
une vitesse d'entrée cible et une vitesse de glissement d'embrayage cible est déterminée, et
les décalages de couple moteur pour les machines-couple (56, 72) sont déterminés sur la base d'une différence entre la vitesse d'entrée et la vitesse d'entrée cible et d'une différence entre la vitesse de glissement d'embrayage et la vitesse de glissement d'embrayage cible.

2. Procédé selon la revendication 1, comprenant en outre l'opération consistant à ajuster un couple d'entrée préféré depuis le moteur (14) vers l'élément d'entrée (12) sur la base du décalage de couple d'entrée et du décalage de couple de sortie de la transmission hybride (10).

3. Procédé selon la revendication 2, comprenant en outre l'opération consistant à ajuster un état préféré du moteur sur la base du décalage de couple d'entrée et du décalage de couple de sortie de la transmission hybride (10).

4. Procédé selon la revendication 1, comprenant en outre l'opération consistant à ajuster des contraintes de couple d'entrée à la transmission hybride (10) sur la base du décalage de couple d'entrée et du décalage de couple de sortie de la transmission hybride (10).

5. Procédé selon la revendication 1, dans lequel la pluralité de machines-couple (56, 72) sont connectées à un dispositif de stockage d'énergie (64), le procédé comprenant en outre les opérations consistant à :

surveiller des entrées d'un opérateur sur une pédale d'accélérateur (113) et sur une pédale de frein (112) ;
déterminer une requête de couple de sortie sur la base des entrées de l'opérateur sur la pédale d'accélérateur (113) et sur la pédale de frein (112) ; et
ajuster le couple d'entrée depuis le moteur (14) vers la transmission (10) et sélectionner un état préféré du moteur sur la base du décalage de couple d'entrée et du décalage de couple de sortie vers la transmission (10).

6. Procédé selon la revendication 1, comprenant en outre l'opération consistant à :

commander le flux de puissance entre le moteur, les machines-couple, le dispositif de stockage d'énergie, et l'élément de sortie pour obtenir l'ordre de couple de sortie sur la base du fonctionnement ajusté du moteur.

*FIG. 1*

FIG. 2

EP 2 055 591 B1

FIG. 3

EP 2 055 591 B1

330

350

Actual Engine State

Engine State Allowed

Lead Hybrid Range State

Lead Input Acceleration Profile Predicted

Predicted Clutch Reactive Torque Min/Max

Predicted Battery Power Limits

Output Torque Request Accel Prdtd

Output Torque Request Brake Prdtd

**Predicted Output Torque Shaping**
**352**

To Accel Prdtd

To Net Prdtd

**Tactical Optimization**
**354**

$P_{COST\ FULL\ FUEL}$

$P_{COST\ FULL\ FCO}$

$P_{COST\ DEAC\ FUEL}$

$P_{COST\ DEAC\ FCO}$

**Stabilization and Arbitration**
**356**

Preferred Engine State — (A)

Input Torque Full

Input Torque Full FCO

Input Torque Deac

Input Torque Deac FCO

Ti CL
To CL

**Low Pass Filter**
**330**

Ti CL Filt
To CL Filt

Output Torque Request Accel Immed

Output Torque Request Brake Immed

**Immediate Output Torque Shaping**
**362**

To Accel Immed

To Net Immed

360

**Output and Input Torque Constraints**
**364**

Input Torque Hybrid Minimum

Input Torque Hybrid Maximum

Battery Power Limits

Lead Input Acceleration Profile Immed

Lead Immediate Clutch Reactive Torque Min/Max

**Engine Torque Conversion**
355

Engine Torque Full — (B)

Engine Torque Deac — (C)

Engine Torque Full FCO — (F)

Engine Torque Deac FCO — (G)

Engine Torque Hybrid Minimum — (D)

Engine Torque Hybrid Maximum — (E)

*FIG. 4A*

| *FIG. 4A* | *FIG. 4B* |
|-----------|-----------|

*FIG. 4*

20

FIG. 4B

CL
410

AD
412

PC
408

Output Torque Request
Accel Immed

Output Torque Request
Brake Immed

Ta PC, Tb PC

LPF
405

Ta AD, Tb AD

Ta CL, Tb CL

Ta LPF
Tb LPF

Clutch Slip
Accel Prof

Nidot_Prof

Opt
Inputs

Pre Optimization
415

Determine To Constraints
440

To Min
Raw

To Max
Raw

To Constraint Shaping
420

To Min
Filt

To Max
Filt

Constrain To_Req
425

To Req
Accel
Cnstrnd

To Req
Brake
Cnstrnd

To Min
Req Filt

To Max
Req Filt

To shaping/Filtering
430

To_cmd

Determine Motor Torque Commands
440'

Ta Opt

Tb Opt

Subtract CL Motor Torques
460

Ta OL

Tb OL

Combine Motor Torque Commands
470

$T_A$

$T_B$

P$_{BAT}$
466

P$_{BAT}$
Min/Max

To Opt

Opt Regen
Capacity

System Inputs and Constraints

Hybrid Range State

Pbat Opt

340

PMap to
Ti,To
406

Ti CL
To CL

To
330

FIG. 5

22

**EP 2 055 591 B1**

## REFERENCES CITED IN THE DESCRIPTION

### Patent documents cited in the description

- EP 1772301 A2
- US 20040072650 A1
- US 20040014563 A1
- US 20030054920 A1
- WO 2006103501 A2
- US 5909094 A